# EUROPÄISCHE PATENTANMELDUNG

(11) **EP 4 715 300 A1**
(43) Veröffentlichungstag der Anmeldung: **25.03.2026**
(21) Anmeldenummer: 25190602.0
(22) Anmeldetag: 21.07.2025
(51) Int. Cl.: F25D 29/00

(54) **HAUSHALTSGERÄTEVORRICHTUNG UND HAUSHALTSGERÄT**

(30) Priorität: 24.09.2024 DE 102024209161
(71) Anmelder: BSH Hausgeräte GmbH, 81739 München (DE)
(72) Erfinder: Weber, Armin, 73466 Lauchheim (DE); Kempfle, Stephan, 89352 Ellzee (DE); Joksch, Harald, 89269 Vöhringen (DE); Osbar, Bernd, 73430 Aalen (DE); Hirschbolz, Andreas, 89428 Syrgenstein / Landshausen (DE)

(57) **Zusammenfassung**

Die Erfindung betrifft eine Haushaltsgerätevorrichtung (10), insbesondere Haushaltskältegerätevorrichtung, mit einem Gehäuse (70), das einen Nutzraum (80), insbesondere einen Kühlraum, definiert, mit einem Leistungssteuerungsgerät (20), mit einem Primär-Steuerungsgerät (30), welche von dem Leistungssteuerungsgerät (20) räumlich getrennt ist, und mit einer Busverbindung (50) für die kombinierten Strom- und Datenübertragung zwischen dem Leistungssteuerungsgerät (20) und dem Primär-Steuerungsgerät (30), wobei das Leistungssteuerungsgerät (20) in einem unteren Bereich des Gehäuses (70) und das Primär-Steuerungsgerät (30) in einem oberen Bereich des Gehäuses (70) angeordnet ist.

## Beschreibung

Die Erfindung betrifft eine Haushaltsgerätevorrichtung, insbesondere eine Haushaltskältegerätevorrichtung, nach Anspruch 1 und ein Haushaltsgerät nach Anspruch 13.

Moderne Kühlgeräte für den Hausgebrauch werden von einer elektronischen Steuerung bzw. von Steuergeräten gesteuert und/oder geregelt. Die Steuerung übernimmt dabei eine Prüfung und Abfrage von Sensoren, eine Ansteuerung unterschiedlicher elektrischer Verbraucher, eine Anbindung der Geräte an ein Datennetzwerk beim Kunden sowie eine Regelung eines Kälteprozesses und weiterer Prozesse.

In den bekannten Lösungen kommt dabei ein zentrales Steuergerät zum Einsatz. Dieses Steuergerät steuert und regelt alle elektronischen Komponenten im Gerät. Beispielsweise werden durch das zentrale Steuergerät elektrische Signale von Sensoren empfangen und verarbeitet und vorwiegend eine Gerätebeleuchtung, eine Heizung und Aktuatoren angesteuert. Ein besonderer Nachteil dieser Lösung ist, dass eine Vielzahl von elektrischen Leitungen zur Verbindung aller elektrischen Komponenten mit dem zentralen Steuergerät notwendig ist.

Durch die Vielzahl von elektronischen Leitungen werden die elektrischen Komponenten der Haushaltsgerätevorrichtung durch ungewollte elektrische und elektromagnetische Effekte gestört und es kann zu Problemen bzgl. elektromagnetischer Verträglichkeit kommen. Zudem muss das zentrale Steuergerät derart ausgelegt sein, dass dieses bei maximaler Gerätekonfiguration, beispielsweise bei maximaler Anzahl von Sensoren und Nutzräumen, vorwiegend Kühlräumen, verwendet werden kann. Dadurch wird in einer Vielzahl von Haushaltsgeräten das zentrale Steuergerät nicht voll genutzt, die hohen Kosten des zentralen Steuergeräts bleiben aber bestehen.

Zudem werden Haushaltsgeräte und darunter auch Kühlgeräte direkt über das länderspezifische Stromversorgungsnetz betrieben. Die Ansteuerung elektrischer Verbraucher und Sensoren erfolgt dabei über ein DC-Netzteil, um Sicherheitsrisiken zu minimieren. Das DC-Netzteil versorgt alle DC-Verbraucher im Gerät, unter anderem Lüfter, Leuchtelemente, Sensoren, etc., und dient auch zur Spannungsversorgung des zentralen Steuergeräts, welches die Gerätesteuerung und -regelung übernimmt. Das DC-Netzteil verfügt dabei über einen Schaltungsaufbau, der eine Spannung des Stromversorgungsnetzes in eine Sicherheitskleinspannung (Safety Extra Low Voltage - SELV) transformiert, die aufgrund ihrer geringen Höhe und der Isolierung gegen Stromkreise höherer Spannung besonderen Schutz gegen einen elektrischen Schlag bietet. Bisheriger DC-Netzteile sind in das zentrale Steuergerät integriert bzw. sind Bestandteil des zentralen Steuergeräts. Je nach Gerätetyp werden dabei unterschiedliche Leistungsklassen an DC-Netzteilen benötigt, wodurch unterschiedliche zentrale Steuergeräte entwickelt, gefertigt und approbiert werden müssen, die, wie oben beschrieben, immer auf die volle Gerätekonfiguration ausgelegt sein müssen. Dies führt zu einem hohen Konfigurationsaufwand und damit zu hohen Fertigungskosten.

Des Weiteren besitzen Kühlgeräte eine elektrische Schnittstelle im Aggregatbereich. Diese Schnittstelle dient zur Versorgung und Programmierung der Geräte während einer Produktion, zur Verbindung der länderspezifischen Hauptanschlussleitung, die eine AC-Spannung bereitstellt, mit dem Gerät und zum Anschluss eines Verdichters. Ebenso können darauf, falls notwendig, Filtermodule zur Verbesserung der länderspezifischen Spannungsversorgung platziert werden. Die AC-Spannung wird aber in diesen Kühlgeräten nachteilig noch von der elektrischen Schnittstelle bis zu dem zentralen Steuergerät geleitet, und erst dort von dem DC-Netzteil in eine DC-Spannung transformiert. Die Verbindung zwischen der elektrischen Schnittstelle und dem DC-Netzteil wird dabei durch elektrische Leitungen realisiert, die vornehmlich durch Isolationsschichten der Kühlgeräte geführt sind und damit einerseits zu einer unnötigen Erwärmung beitragen und andererseits einen Fertigungsaufwand erhöhen. Zudem können die elektrischen Leitungen durch ungewollte elektrische und elektromagnetische Effekte die elektronischen Komponenten der Haushaltsgerätevorrichtung stören und es kann zu Problemen bzgl. elektromagnetischer Verträglichkeit kommen.

Eine Aufgabe der vorliegenden Erfindung ist es, eine Haushaltsgerätevorrichtung bereitzustellen, die die obigen Nachteile überwindet. Insbesondere soll eine Haushaltsgerätevorrichtung bereitgestellt werden, deren Steuergeräte einfach an die Gerätekonfiguration angepasst werden können, die weniger erwärmt wird, die leichter zu fertigen ist und/oder eine höhere elektromagnetische Verträglichkeit aufweist. Diese Aufgabe wird insbesondere durch eine Haushaltsgerätevorrichtung gemäß Anspruch 1 und ein Haushaltsgerät gemäß Anspruch 13 gelöst. Vorteilhafte Ausgestaltungen und Weiterbildungen der Erfindung sind den abhängigen Ansprüchen zu entnehmen.

Ein Aspekt der Erfindung betrifft eine Haushaltsgerätevorrichtung, insbesondere eine Haushaltskältegerätevorrichtung, mit einem Leistungssteuerungsgerät, mit einem Primär-Steuerungsgerät, mit wenigstens einem Funktionssteuerungsgerät, welches dazu eingerichtet ist, eine spezifische Funktion eines Haushaltsgeräts zu betreiben, und mit einer Busverbindung für die kombinierten Strom- und Datenübertragung, wobei das Leistungssteuerungsgerät, das Primär-Steuerungsgerät und das wenigstens eine Funktionssteuerungsgerät über die Busverbindung verbunden sind.

Ein Aspekt der Erfindung betrifft eine Haushaltsgerätevorrichtung, insbesondere eine Haushaltskältegerätevorrichtung, mit einem Gehäuse, das einen Nutzraum, insbesondere einen Kühlraum, definiert, mit einem Leistungssteuerungsgerät, mit einem Primär-Steuerungsgerät, welche von dem Leistungssteuerungsgerät räumlich getrennt ist, und mit einer Busverbindung für die kombinierten Strom- und Datenübertragung zwischen dem Leistungssteuerungsgerät und dem Primär-Steuerungsgerät, wobei das Leistungssteuerungsgerät in einem unteren Bereich des Gehäuses und das Primär-Steuerungsgerät in einem oberen Bereich des Gehäuses angeordnet ist.

Ein Aspekt der Erfindung betrifft eine Haushaltsgerätevorrichtung, insbesondere eine Haushaltskältegerätevorrichtung, mit einem Leistungssteuerungsgerät, mit einem Primär-Steuerungsgerät und mit einer Busverbindung für eine kombinierte Strom- und Datenübertragung zwischen dem Leistungssteuerungsgerät und dem Primär-Steuerungsgerät, wobei das Leistungssteuerungsgerät und das Primär-Steuerungsgerät zur Strom- und Datenübertragung ausschließlich über die Busverbindung verbunden sind.

Die vorgenannten Aspekte der Erfindung können dabei einzeln oder auch in Kombination untereinander betrachtet werden. Ferner betrifft die Erfindung ein Haushaltsgerät mit einer erfindungsgemäßen Haushaltsgerätevorrichtung.

Durch die erfindungsgemäße Haushaltsgerätevorrichtung kann eine Anzahl an Leitungen minimiert werden. Dadurch können Kosten minimiert und etwaige Probleme bezüglich einer elektromagnetischen Verträglichkeit reduziert werden. Zudem macht der modulare Aufbau mit voneinander getrennten Steuergeräten der erfindungsgemäßen Haushaltsgerätevorrichtung mit dem Leistungssteuerungsgerät, dem Primär-Steuerungsgerät und/oder dem wenigstens eine Funktionssteuerungsgerät eine gezielte Anpassung der Steuergeräte an Funktionen des Haushaltsgeräts möglich. Mit anderen Worten ist es durch den modularen Aufbau nicht notwendig oder nicht in bisherigem Ausmaß notwendig, auf den Steuergeräten Funktionalitäten vorzuhalten, die bei einer gegenwärtigen Haushaltsgerätekonfiguration nicht verwendet werden. Zudem können mit einer einzigen Elektronikarchitektur alle Haushaltsgerätekonfiguration abgedeckt werden. Weiter kann eine Komplexität der einzelnen Steuergeräte sehr stark reduziert werden. Dabei können Steuergeräte, die in allen oder den meisten Haushaltsgerätekonfigurationen eingesetzt werden, insbesondere das Leistungssteuerungsgerät und/oder das Primär-Steuerungsgerät, mit einer sehr hohen Stückzahl und damit geringen Kosten produziert werden. Die Steuergeräte, insbesondere das wenigstens eine Funktionssteuergerät, die nur in wenigen Haushaltsgerätekonfigurationen eingesetzt werden, können eine geringere Komplexität aufweisen und werden dadurch kostengünstiger.

Zudem können durch die Trennung des Leistungssteuerungsgeräts von dem Primär-Steuerungsgerät die unterschiedlichen Gerätetypen und Werteklassen variabel durch Einsatz unterschiedlicher Leistungssteuerungsgeräte dargestellt werden. Dabei bleibt das restliche Elektronikkonzept der Haushaltsgerätevorrichtung, insbesondere das Primär-Steuerungsgerät und/oder das wenigstens eine Funktionssteuerungsgerät unverändert, lediglich das Leistungssteuerungsgerät wird adaptiert. Zudem kann die Stromversorgung direkt an das Leistungssteuerungsgerät angeschlossen und dadurch eine zusätzliche Schnittstelle zum Anschluss der Stromversorgung eingespart werden.

Insbesondere kann durch die Anordnung des Primär-Steuergeräts in dem oberen Bereich des Gehäuses, die Höhe des Gehäuses in dem oberen Bereich reduziert werden. Insbesondere wird dadurch eine Reduzierung einer Höhe eines Top-Panels des Gehäuses ermöglicht. Zudem verändert sich durch die Anordnung des Primär-Steuergeräts in dem oberen Bereich des Gehäuses und des Leistungssteuerungsgeräts in dem unteren Bereich des Gehäuses der Wärmeeintrag im oberen Bereich des Haushaltsgeräts, in dem beispielsweise Kühlkomponenten angeordnet sein können. Das Primär-Steuerungsgerät kann insbesondere an einer Oberseite des Gehäuses angeordnet sein.

Die Haushaltsgerätevorrichtung kann Teil, vorzugsweise eine Unterbaugruppe, eines Haushaltsgeräts, beispielsweise eines Wäschebehandlungsgeräts, eines Gargeräts, einer Geschirrspülmaschine und vorzugsweise eines Kühlgeräts, insbesondere eines Kühl- und/oder Gefrierschranks, sein.

Das Leistungssteuerungsgerät, das Primär-Steuerungsgerät und/oder das Funktionssteuerungsgerät kann jeweils eine Platine umfassen. Die Platine kann in ein Gehäuse des jeweiligen Geräts aufgenommen sein. Das Leistungssteuerungsgerät, das Primär-Steuerungsgerät und/oder das Funktionssteuerungsgerät können untereinander galvanisch getrennt sein und durch die Busverbindung, insbesondere ausschließlich durch die Busverbindung, miteinander verbunden sein. Mit anderen Worten weisen das Leistungssteuerungsgerät, das Primär-Steuerungsgerät und das Funktionssteuerungsgerät keine gemeinsame Platine auf und/oder sind nicht auf einer gemeinsamen Platine angeordnet.

In manchen Ausgestaltungen können über die Busverbindung in zumindest eine Richtung Energie und in beide Richtungen Daten übertragen werden.

Das Leistungssteuerungsgerät kann beispielsweise eine Schnittstelle zu einer länderspezifischen Versorgungsleitung aufweisen und/oder kann das Primär-Steuerungsgerät und das wenigstens eine Funktionssteuerungsgerät mit elektrischer Energie versorgen. Zudem kann das Leistungssteuerungsgerät weitere Verbraucher der Haushaltsgerätevorrichtung und insbesondere des Haushaltsgeräts ansteuern und/oder regeln und/oder mit Energie versorgen. Das Primär-Steuerungsgerät kann beispielsweise eine Benutzerschnittstelle umfassen. Zudem kann das Primär-Steuerungsgerät dazu eingerichtet sein, das Leistungssteuerungsgerät und das wenigstens eine Funktionssteuerungsgerät zu koordinieren und/oder zu steuern und/oder zu regeln. Das wenigstens eine Funktionssteuerungsgerät kann dazu eingerichtet sein, eine Funktionseinheit eines Haushaltsgeräts, insbesondere einen Eisbereiter und/oder eine NoFrost Einheit zu steuern und/oder zu regeln.

Das Gehäuse kann ein Innengehäuse, ein Außengehäuse und eine dazwischenliegende Isolierschicht aufweisen. Das Innengehäuse kann hierbei aus einem Kunststoffmaterial bestehen und vorzugsweise durch Thermoformen hergestellt sein. Das Außengehäuse kann aus einem Metallmaterial, vorzugsweise aus Metallblech, bestehen. Bei der Isolierschicht kann es sich um ein Schaummaterial, insbesondere einen PU-Schaum handeln, welcher bei der Herstellung des Gehäuses und/oder des Haushaltsgeräts durch Ausschäumen eines Zwischenraums zwischen dem Innengehäuse und dem Außengehäuse eingebracht wird.

Das Gehäuse kann einen Nutzraum und/oder einen weiteren Nutzraum umgeben und/oder definieren. Insbesondere kann der Nutzraum und/oder der weitere Nutzraum durch das Innengehäuse definiert sein. Der Nutzraum kann oberhalb des weiteren Nutzraums angeordnet sein. Der Nutzraum kann ein Kühlraum und der weitere Nutzraum ein Gefrierraum sein. Zudem kann die Haushaltsgerätevorrichtung und insbesondere das Haushaltsgerät eine an dem Gehäuse angelenkte Tür aufweisen, um den Nutzraum und/oder den weiteren Nutzraum zu verschließen. Dabei könnte für jeden Nutzraum eine separate Tür oder auch eine gemeinsame Tür für beide Nutzräume vorgesehen sein.

Der obere Bereich des Gehäuses kann oberhalb des Nutzraums und der untere Bereich des Gehäuses kann unterhalb des Nutzraums und/oder des weiteren Nutzraums angeordnet sein. Zudem kann der obere Bereich des Gehäuses auch auf Höhe des Nutzraums und der untere Bereich des Gehäuses auf Höhe des weiteren Nutzraums angeordnet sein. Der obere Bereich des Gehäuses kann sich bezüglich einer Höhenerstreckung des Gehäuses über eine obere Hälfte des Gehäuses erstrecken. Der untere Bereich des Gehäuses kann sich bezüglich der Höhenerstreckung des Gehäuses über eine untere Hälfte des Gehäuses erstrecken. Sämtliche Punkte des oberen Bereichs des Gehäuses sind entlang der Höhenerstreckung des Gehäuses betrachtet um höchstens 60 cm, insbesondere um höchstens 40 cm und vorteilhaft um höchstens 20 cm von einer Oberkante des Gehäuses beabstandet. Sämtliche Punkte des unteren Bereichs des Gehäuses sind entlang der Höhenerstreckung des Gehäuses betrachtet um höchstens 60 cm, insbesondere um höchstens 40 cm und vorteilhaft um höchstens 20 cm von einer Unterkante des Gehäuses beabstandet.

Um die Haushaltsgerätevorrichtung optimal an die Haushaltsgerätekonfiguration anpassen zu können, kann das wenigstens eine Funktionssteuerungsgerät eine Kältesystemsteuerung und/oder eine Eisbereitersteuerung und/oder eine NoFrost-Steuerung umfassen.

Alternativ oder zusätzlich kann die Haushaltsgerätevorrichtung auch ein Funktionssteuerungsgerät mit einer Kältesteuerung und/oder ein weiteres Funktionssteuerungsgerät mit einer Eisbereitersteuerung und/oder ein zusätzliches Funktionssteuerungsgerät mit einer NoFrost-Steuerung umfassen. Durch die Auftrennung der einzelnen Steuerungen auf einzelne Funktionssteuerungsgeräte kann die Anzahl der Funktionssteuerungsgeräte, die vielen Haushaltsgerätekonfigurationen gemein ist, erhöht werden.

Die Kältesystemsteuerung kann dazu eingerichtet sein, eine Temperatur in einem Kühlraum und/oder Gefrierraum, insbesondere des Haushaltsgeräts, zu regulieren. Die Eisbereitersteuerung kann dazu eingerichtet sein, einen Eisbereiter, insbesondere einen Eiswürfelbereiter, der Haushaltsgerätevorrichtung und insbesondere des Haushaltsgeräts zu steuern und/oder zu regeln. Der Eisbereiter kann dazu eingerichtet sein, Eis und insbesondere Eiswürfel zu produzieren und bereitzustellen. Die NoFrost-Steuerung kann dazu eingerichtet sein, einen Kühlraum und/oder Gefrierraum zu kühlen und/oder zu verhindern, das Eis bzw. Reif in einem Kühlraum und/oder einem Gefrierraum, insbesondere des Haushaltsgeräts, entsteht.

Das wenigstens eine Funktionssteuerungsgerät kann ein Heat Exchange Unit Control Module und/oder ein Ice Water System Control Module und/oder ein Feature Control Module umfassen und/oder sein. Die Haushaltsgerätevorrichtung kann ein Funktionssteuerungsgerät umfassen, das ein Heat Exchange Unit Control Module umfasst oder ist. Die Haushaltsgerätevorrichtung kann zusätzlich oder alternativ ein Funktionssteuerungsgerät umfassen, das ein Ice Water System Control Module umfasst oder ist. Die Haushaltsgerätevorrichtung kann zusätzlich oder alternativ ein Funktionssteuerungsgerät umfassen, das ein Up-Selling Control Module umfasst oder ist. Das Heat Exchange Unit Control Module umfasst insbesondere eine Steuerungselektronik für einzelne NoFrost-Steuerungen. Das Ice Water System Control Module kann eine Steuerungselektronik zur Ansteuerung eines Eisbereiters umfassen. Das Feature Control Module kann eine Steuerungselektronik zur gezielten Ansteuerung von weiteren elektrischen Verbrauchern umfassen. Die weiteren elektrischen Verbraucher können insbesondere elektrische Verbraucher für zusätzliche Funktionen sein, welche in wenigen Haushaltsgerätekonfigurationen zum Einsatz kommen, beispielsweise eine Hygieneüberwachung und/oder ein Hygiene-Fach und/oder ein Feuchte-Fach und/oder eine Feuchte-Regelung und/oder eine Vakuum-Pumpe und/oder ein Vakuum-Fach.

Um eine Teileanzahl des Haushaltsgeräts zu reduzieren und das Primär-Steuerungsgerät mit einer höheren Stückzahl produzieren zu können, kann das Primär-Steuerungsgerät eine Benutzerschnittstelle umfassen und/oder kann das Primär-Steuerungsgerät in die Benutzerschnittstelle der Haushaltsgerätevorrichtung und insbesondere des Haushaltsgeräts integriert sein.

Zusätzlich oder alternativ kann das Primär-Steuerungsgerät einen Hauptprozessor zur Ansteuerung von Verbrauchern, vorzugsweise von DC-Verbrauchern, insbesondere eines Aktuators und/oder einer Beleuchtungseinheit, die beispielsweise Leuchtmittel umfasst, und Sensoren umfassen.

Die Benutzerschnittstelle kann eine Schnittstelle zur Regelung einer Temperatur und/oder eines Kühlgrads und/oder der DC-Verbraucher sein.

Dadurch kann das Primär-Steuerungsgerät insbesondere in nahezu allen oder in allen Haushaltsgerätekonfigurationen zum Einsatz kommen, da nahezu alle oder alle Haushaltsgerätekonfigurationen eine Benutzerschnittstelle und/oder einen Hauptprozessor aufweisen. Der Hauptprozessor kann beispielsweise als Sitz der Haupt-Software der Haushaltsgerätevorrichtung dienen. Beispielsweise umfasst das Primär-Steuerungsgerät eine Leistungs- und Regelungselektronik für DC-Verbraucher und/oder für DC-Komponenten der Haushaltsgerätevorrichtung und insbesondere des Haushaltsgeräts, die beispielsweise auf Basis von Eingangsdaten von Sensoren der Haushaltsgerätevorrichtung und insbesondere des Haushaltsgeräts geregelt werden. Das Primär-Steuerungsgerät kann eine Leistungs- und Regelungselektronik für die Benutzerschnittstelle des Haushaltsgeräts aufweisen. Zudem kann das Primär-Steuerungsgerät eine Digital Control Unit umfassen und/oder als eine solche ausgebildet sein.

Um die Steuerung möglichst vieler Komponenten, die insbesondere für alle Haushaltsgerätekonfigurationen eingesetzt werden können, in ein Steuergerät integrieren zu können, kann das Leistungssteuerungsgerät eine Kühlgeräteaggregatssteuerung umfassen. Zusätzlich oder alternativ kann das Leistungssteuerungsgerät eine Verdichtersteuerung und/oder eine Lüftersteuerung aufweisen. Zusätzlich kann das Leistungssteuerungsgerät eine Schnittstelle aufweisen, über die die Haushaltsgerätevorrichtung an eine Spannungsversorgung angeschlossen werden kann. Weiter kann das Leistungssteuerungsgerät Sitz eines AC/DC Netzteils sein, durch das die weiteren Steuergeräte und/oder Funktionen der Haushaltsgerätevorrichtung mit einer DC-Spannung, insbesondere einer Sicherheitskleinspannung, versorgt werden können. Dadurch kann das Leistungssteuerungsgerät kostengünstig in großer Stückzahl hergestellt werden. Das Leistungssteuerungsgerät kann insbesondere eine Power Unit Motor Unit umfassen und/oder sein.

Vorzugsweise kann das Primär-Steuerungsgerät und/oder das wenigstens eine Funktionssteuerungsgerät jeweils als Sicherheitskleinspannungs-Komponenten und das Leistungssteuerungsgerät als eine Netzspannungskomponente ausgebildet sein. Dabei kann das Primär-Steuerungsgerät und/oder das wenigstens eine Funktionssteuerungsgerät über die Busverbindung mit einer Sicherheitskleinspannung, insbesondere mit einer 12V Spannung, versorgt werden. Das Leistungssteuerungsgerät kann an die Spannungsversorgung mit der AC-Spannung angeschlossen sein, und kann eine Filtereinheit umfassen, um die AC-Spannung zu filtern.

Durch die Ausgestaltung des Primär-Steuerungsgeräts als Sicherheitskleinspannungs-Komponente können die normativen Anforderungen an das Primär-Steuerungsgerät und das wenigstens eine Funktionssteuerungsgerät reduziert werden. Zudem muss das Primär-Steuerungsgerät und das wenigstens eine Funktionssteuerungsgerät geringeren Anforderungen bezüglich eines Berührschutzes gerecht werden. Weiter können diese vereinfacht gefertigt werden, beispielsweise muss keine Mindestabzugskraft (Demontagekraft) bei der Montage des Primär-Steuerungsgeräts und/oder des wenigstens einen Funktionssteuerungsgeräts eingehalten werden. Weiter können die Anforderungen an einen Brandschutz verringert werden, die an das Primär-Steuerungsgerät und/oder das wenigstens eine Funktionssteuerungsgerät gestellt werden, und es kann eine Fertigung aus kostengünstigeren Rohmaterialien ermöglicht werden. Zusätzlich können durch die Ausgestaltung des Primär-Steuerungsgeräts und/oder des wenigstens einen Funktionssteuerungsgeräts als Sicherheitskleinspannungs-Komponente diese mit einem geringeren Abstand zu Isolierungen und/oder mit einem kleineren Luftspalt zwischen dem Primärsteuerungsgerät und/oder des wenigstens eine Funktionssteuerungsgeräts und der Isolierung verbaut werden. Dadurch kann eine PCB (Printed Circuit Board) Größe und einer Größe des Gehäuses reduziert werden. Zudem kann dadurch eine Größe des Haushaltsgeräts insgesamt reduziert und/oder ein zur Verfügung stehender Nutzraum vergrößert werden.

Zudem kann dadurch die Ausgestaltung des Primär-Steuerungsgeräts und/oder des wenigstens einen Funktionssteuerungsgeräts als Sicherheitskleinspannungs-Komponente vermieden werden, dass Leitungen, über die die (hohe) AC-Spannung übertragen wird, durch das gesamte Haushaltsgerät geführt werden müssen. Dadurch kann eine elektromagnetische Verträglichkeit verbessert werden.

Weiter kann dadurch, dass in dem Primär-Steuerungsgerät und/oder dem wenigstens einen Funktionssteuerungsgerät keine AC-Bauteile, die einen großen Bauraum benötigen, mehr notwendig sind, weniger Leitungen mit einem geringeren Leitungsquerschnitt eingesetzt werden. Zudem können kostengünstigere Stecker, beispielsweise RAST2.5 anstatt RAST2.5p Stecker, verwendet werden.

Vorzugweise kann das Leistungssteuerungsgerät eine Sicherheitskleinspannung für das Primär-Steuerungsgerät und das wenigstens eine Funktionssteuerungsgerät über die Busverbindung bereitstellen.

Beispielsweise umfasst das Leistungssteuerungsgerät ein Netzteil, durch welches eine Verbindung zu länderspezifischen Versorgungsleitungen herstellbar ist. Zudem kann das Leistungssteuerungsgerät eine Schnittstelle zur Programmierung länderspezifischer Anforderungen aufweisen. Damit kann die Haushaltsgerätevorrichtung mit geringem Aufwand an die länderspezifischen Anforderungen angepasst werden.

Insbesondere ist die Busverbindung als ein D-Bus und/oder ein CAN-Bus ausgebildet. Vorzugsweise ist die Busverbindung ausschließlich als ein D-Bus ausgebildet, um eine einfache und kostengünstige Strom- und Datenübertragung sowie Programmierung der Datenübertragung zu gewährleisten. Um eine schnelle Kommunikation zwischen den einzelnen Steuergeräten zu ermöglichen, kann die Busverbindung alternativ auch als CAN-Bus ausgebildet sein. Es ist aber auch denkbar, dass die Busverbindung einen D-Bus und einen CAN-Bus umfasst, um die Datenübertragung genauer an ihre spezifischen Anforderungen anpassen zu können.

Insbesondere können das Leistungssteuerungsgerät, das Primär-Steuerungsgerät und/oder das wenigstens ein Funktionssteuerungsgerät zur Strom- und Datenübertragung ausschließlich über die Busverbindung verbunden sein. Dadurch können die Anzahl der Leitungen in dem Haushaltsgerät stark reduziert werden.

Um die Anzahl an elektronischen Komponenten weiter zu reduzieren, kann das Leistungssteuerungsgerät, insbesondere über die Busverbindung, direkt mit dem wenigstens einen Funktionssteuerungsgerät verbunden sein, und/oder das Primär-Steuerungsgerät, insbesondere über die Busverbindung, direkt mit dem wenigstens einen Funktionssteuerungsgerät verbunden sein, insbesondere jeweils ohne ein weiteres Gerät, insbesondere ein Steuergerät, dazwischen.

In einer Ausgestaltung der Erfindung kann das wenigstens eine Funktionssteuerungsgerät bezüglich einer Höhenrichtung zwischen dem Leistungssteuerungsgerät und dem Primär-Steuerungsgerät angeordnet sein. Dadurch sind das Leistungssteuerungsgerät und das Primär-Steuerungsgerät, das empfindliche Komponenten, wie beispielsweise die Benutzerschnittstelle umfassen kann, vorteilhaft weit voneinander entfernt. Zudem kann das Funktionssteuerungsgerät direkt an einer Funktionseinheit, die durch das Funktionssteuerungsgerät gesteuert wird, angeordnet sein. Dadurch kann eine Länge einer Leitung zwischen dem Funktionssteuerungsgerät und der Funktionseinheit, die durch das Funktionssteuerungsgerät gesteuert wird, reduziert werden.

Insbesondere kann die Haushaltsgerätevorrichtung einen Nutzraum, insbesondere einen Kühlraum, einen weiteren Nutzraum, insbesondere einen Gefrierraum, und ein weiteres Funktionssteuerungsgerät aufweisen. Das Funktionssteuerungsgerät kann beispielsweise eine Kältesystemsteuerung und/oder eine Eisbereitersteuerung für den Nutzraum umfassen. Das weitere Funktionssteuerungsgerät kann eine weitere Kältesystemsteuerung und/oder eine weitere Eisbereitersteuerung für den weiteren Nutzraum umfassen. Damit kann dieselbe Elektronikarchitektur für Haushaltsgeräte mit nur einem Nutzraum und für Haushaltsgeräte mit zumindest zwei Nutzräumen verwendet werden. Die Konfiguration mit zwei Nutzräumen erfordert im Unterschied zu der Konfiguration mit einem Nutzraum lediglich das Hinzufügen eines weiteren Funktionssteuerungsgeräts.

Um die Länge einer Leitung zwischen dem Funktionssteuerungsgerät und der Funktionseinheit, die durch das Funktionssteuerungsgerät gesteuert wird, zu reduzieren, kann das Funktionssteuerungsgerät hinter dem Nutzraum und das weitere Funktionssteuerungsgerät hinter dem weiteren Nutzraum angeordnet sein.

Zudem kann die Haushaltsgerätevorrichtung ein Gehäuse umfassen, das einen Nutzraum insbesondere einen Kühlraum, definiert, und das wenigstens eine Funktionssteuerungsgerät an einer Rückseite des Gehäuses an dem Gehäuse angeordnet und/oder in dem Gehäuse angeordnet ist. Das wenigstens eine Funktionssteuerungsgerät kann insbesondere an der Rückseite des Gehäuses steckbar anbringbar sein. Das wenigstens eine Funktionssteuerungsgerät kann insbesondere in einen Rahmen steckbar und/oder einrastbar anbringbar sein. Der Rahmen kann einen Deckel aufweisen, wodurch das wenigstens eine Funktionssteuerungsgerät nach außen hin abgedeckt, insbesondere abgedichtet, sein kann. Insbesondere kann zwischen Rahmen und dem Deckel eine 2K Dichtung angebracht sein.

Insbesondere kann das Primär-Steuerungsgerät von der Isolierschicht des Gehäuses zumindest teilweise umgeben sein. Insbesondere kann das Primär-Steuerungsgerät mit geringen Abständen zu der Isolierschicht, insbesondere mit einem kleineren Luftspalt zwischen dem Primär-Steuerungsgerät und der Isolierschicht, verbaut werden. Dadurch kann insgesamt die Größe des Haushaltsgeräts verringert und/oder ein zur Verfügung stehender Nutzraum vergrößert werden.

Insbesondere weist die Haushaltsgerätevorrichtung einen Maschinenraum auf, welcher von dem Gehäuse definiert und in und/oder an welchem das Leistungssteuerungsgerät angeordnet ist. Dadurch ist sichergestellt, dass beispielsweise die AC-Komponenten, die in dem Leistungssteuerungsgerät verbaut sind, gut von den übrigen DC-Komponenten des Haushaltsgeräts und/oder der Haushaltsgerätevorrichtung abgeschirmt sind. Ferner kann eine gute Zugänglichkeit zum Leistungssteuerungsgerät ermöglicht werden, beispielsweise zu Wartungs- und/oder Reparaturzwecken.

Um das Primär-Steuerungsgerät vor Umwelteinflüssen zu schützen, kann das Primär-Steuerungsgerät insbesondere in das Gehäuse eingebracht sein. Weiter kann das Primär-Steuerungsgerät von einer Isolierschicht des Gehäuses zumindest teilweise umgeben und insbesondere in die Isolierschicht eingeschäumt sein. Dadurch kann das Primär-Steuerungsgerät kostengünstig in das Gehäuse integriert werden. Insbesondere ist das Primär-Steuerungsgerät an einer Oberseite des Gehäuses in das Gehäuse integriert. Dadurch ist das Primär-Steuerungsgerät vor dem Leistungssteuerungsgerät abgeschirmt. Um das Primär-Steuerungsgerät noch besser von dem Leistungssteuerungsgerät abschirmen zu können, ist das Leistungssteuerungsgerät vorzugsweise in einem unteren Bereich des Gehäuses angeordnet. Zudem kann dazu die Haushaltsgerätevorrichtung einen Maschinenraum aufweisen, welcher von dem Gehäuse definiert und in und/oder an welchem das Leistungssteuerungsgerät angeordnet ist.

Im Folgenden wird die vorliegende Erfindung anhand der beigefügten Figuren beispielhaft beschrieben. Die Zeichnung, die Beschreibung und die Ansprüche enthalten zahlreiche Merkmale in Kombination. Der Fachmann wird die Merkmale zweckmäßigerweise auch einzeln betrachten und im Rahmen der Ansprüche sinnvoll in Kombination verwenden.

Falls von einem bestimmten Objekt mehr als ein Exemplar vorhanden ist, ist ggf. nur eines davon in den Figuren und in der Beschreibung mit einem Bezugszeichen versehen. Die Beschreibung dieses Exemplars kann entsprechend auf die anderen Exemplare von dem Objekt übertragen werden. Sind Objekte insbesondere mittels Zahlenwörtern, wie beispielsweise erstes, zweites, drittes Objekt etc. benannt, dienen diese der Benennung und/oder Zuordnung von Objekten. Demnach können beispielsweise ein erstes Objekt und ein drittes Objekt, jedoch kein zweites Objekt umfasst sein. Allerdings könnten anhand von Zahlenwörtern zusätzlich auch eine Anzahl und/oder eine Reihenfolge von Objekten ableitbar sein.

Es zeigen:
- Fig. 1: ein Haushaltsgerät mit einer erfindungsgemäßen Haushaltsgerätevorrichtung in einer schematischen seitlichen Darstellung; und
- Fig. 2: eine weitere Ausführungsform eines Haushaltsgeräts mit einer erfindungsgemäßen Haushaltsgerätevorrichtung.

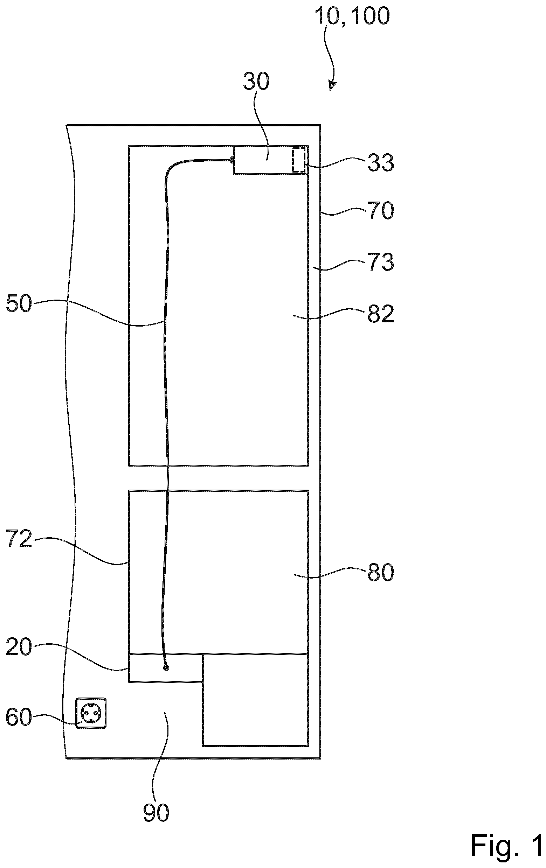

Figur 1 zeigt eine beispielhafte Ausführungsform einer erfindungsgemäßen Haushaltsgerätevorrichtung 10, die ein Teil eines beispielhaften Haushaltsgerät 100 ist. Das Haushaltsgerät 100 ist vorliegend als ein Standkühlschrank ausgebildet. Beispielhaft weist die Haushaltsgerätevorrichtung einen Nutzraum 80 und einen weiteren Nutzraum 82 auf, die durch ein Gehäuse 70 der Haushaltsgerätevorrichtung 10 definiert sind. Die Nutzräume 80, 82 sind durch eine gemeinsame Tür oder durch getrennte Türen der Haushaltsgerätevorrichtung 10 verschließbar. Der Nutzraum 80 kann ein Kühlraum und der weitere Nutzraum 82 ein Gefrierraum sein.

Das Gehäuse 70 kann einen Maschinenraum 90 umfassen und/oder bilden. Der Maschinenraum 90 ist unterhalb des weiteren Nutzraums 82 angeordnet. In dem Maschinenraum 90 kann beispielsweise ein Kompressor (nicht dargestellt) angeordnet sein.

Die Haushaltsgerätevorrichtung 10 umfasst ein Leistungssteuerungsgerät 20 und ein Primär-Steuerungsgerät 30, die über eine Busverbindung 50 miteinander verbunden sind.

Das Leistungssteuerungsgerät 20 ist im Maschinenraum 90 angeordnet. Beispielhaft ist das Leistungssteuerungsgerät 20 derart in den Maschinenraum 90 eingebracht, dass dieses bündig mit einer Rückseite 72 des Gehäuses 70 abschließt. Das Leistungssteuerungsgerät 20 ist an einer Wand des Gehäuses 70 befestigt, beispielsweise angeschraubt oder verrastet. Das Leistungssteuerungsgerät 20 ist in einem Betrieb an eine länderspezifische Versorgungsleitung 60 angeschlossen.

Das Primär-Steuerungsgerät 30 ist beispielhaft oberhalb des Nutzraums 82 derart angeordnet, dass dieses bündig mit einer Vorderseite 73 des Gehäuses abschließt. Das Primär-Steuerungsgerät 30 ist in einer Wandung des Gehäuses 70 aufgenommen. Beispielsweise kann in das Primär-Steuerungsgerät 30 eine Benutzerschnittstelle 33 der Haushaltsgerätevorrichtung 100 integriert sein, die bündig mit der Vorderseite 73 des Gehäuses abschließt und dadurch derart in dem Haushaltsgerät angeordnet ist, dass die Benutzerschnittstelle 33 einfach zugänglich ist.

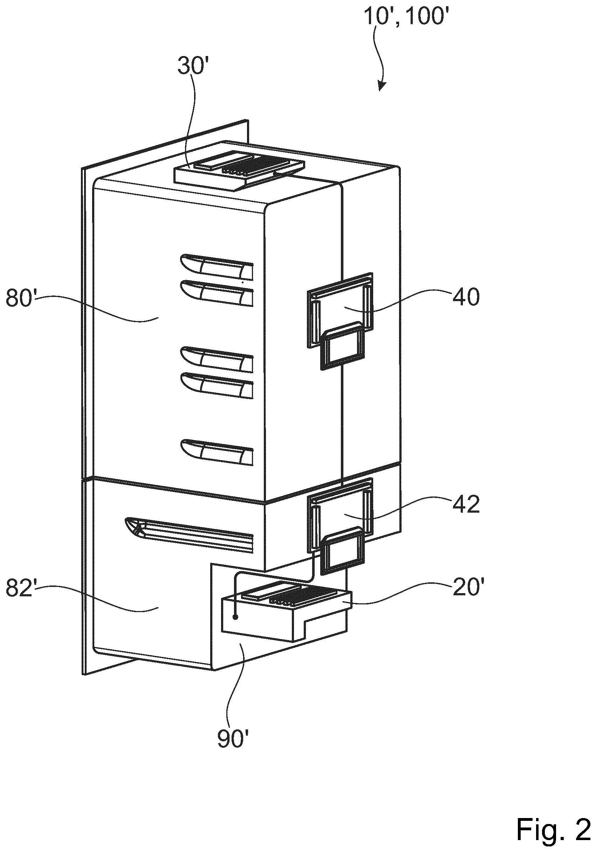

Figur 2 zeigt eine weitere beispielhafte Ausführungsform einer erfindungsgemäßen Haushaltsgerätevorrichtung 10', die ein Teil eines beispielhaften Haushaltsgeräts 100' ist. Beispielhaft weist die Haushaltsgerätevorrichtung einen Nutzraum 80' und einen weiteren Nutzraum 82' auf. Der Nutzraum 80' und der weitere Nutzraum 82' können in einem Gehäuse (nicht dargestellt) angeordnet sein.

Die Haushaltsgerätevorrichtung 10' umfasst ein Leistungssteuerungsgerät 20', ein Primär-Steuerungsgerät 30' sowie ein Funktionssteuerungsgerät 40 und ein weiteres Funktionssteuerungsgerät 41. Das Leistungssteuerungsgerät 20', das weitere Funktionssteuerungsgerät 42, das Funktionssteuerungsgerät 40 sowie das Primär-Steuerungsgerät 30' sind über eine Busverbindung 50' miteinander verbunden.

Beispielsweise ist zunächst das Leistungssteuerungsgerät 20' mit dem weiteren Funktionssteuerungsgerät 42 verbunden. Darauffolgend ist das weitere Funktionssteuerungsgerät mit dem Funktionssteuerungsgerät 40 verbunden und anschließend das Funktionssteuerungsgerät mit dem Primär-Steuerungsgerät 30' verbunden. Das Leistungssteuerungsgerät 20' ist in einem Maschinenraum 90' angeordnet, der durch das Gehäuses 70' gebildet wird und unterhalb des weiteren Nutzraums 82' angeordnet ist.

Das Primär-Steuerungsgerät 20' ist oberhalb des Nutzraums 80' angeordnet. Zudem sind das Funktionssteuerungsgerät 40 und das weitere Funktionssteuerungsgerät 40' in einer Höhenrichtung zwischen dem Leistungssteuerungsgerät 20' und dem Primär-Steuerungsgerät 30' angeordnet. Dabei ist das Funktionssteuerungsgerät 40 an einer Rückseite des Nutzraums 80' und das weitere Funktionssteuerungsgerät 42 an einer Rückseite des weiteren Nutzraums 82' angeordnet.

### Bezugszeichen

- 10, 10': Haushaltsgerätevorrichtung
- 20, 20': Leistungssteuerungsgerät
- 21: Busanschluss
- 22: elektrische Schnittstelle
- 30, 30': Primär-Steuerungsgerät
- 31: Sensoranschluss
- 32: Leuchtmittelanschluss
- 33: Benutzerschnittstelle
- 40: Funktionssteuerungsgerät
- 42: weiteres Funktionssteuerungsgerät
- 50, 50': Busverbindung
- 60: länderspezifische Versorgungsleitung
- 70: Gehäuse
- 71: Oberseite
- 72: Rückseite
- 73: Vorderseite
- 80, 80': Nutzraum
- 82, 82': weiterer Nutzraum
- 90: Maschinenraum
- 100, 100': Haushaltsgerät
- 110: Tür
- 120: Hygienesteuerung

## Patentansprüche

1. Haushaltsgerätevorrichtung (10), insbesondere Haushaltskältegerätevorrichtung, mit einem Gehäuse (70), das einen Nutzraum (80), insbesondere einen Kühlraum, definiert, mit einem Leistungssteuerungsgerät (20), mit einem Primär-Steuerungsgerät (30), welche von dem Leistungssteuerungsgerät (20) räumlich getrennt ist, und mit einer Busverbindung (50) für die kombinierten Strom- und Datenübertragung zwischen dem Leistungssteuerungsgerät (20) und dem Primär-Steuerungsgerät (30), wobei das Leistungssteuerungsgerät (20) in einem unteren Bereich des Gehäuses (70) und das Primär-Steuerungsgerät (30) in einem oberen Bereich des Gehäuses (70) angeordnet ist.

2. Haushaltsgerätevorrichtung (10) nach Anspruch 1, **dadurch gekennzeichnet, dass** das Leistungssteuerungsgerät (20) und das Primär-Steuerungsgerät (30) zur Strom- und Datenübertragung ausschließlich über die Busverbindung (50) verbunden sind.

3. Haushaltsgerätevorrichtung (10) nach einem der Ansprüche 1 oder 2, **dadurch gekennzeichnet, dass** die Busverbindung (50) als ein D-Bus und/oder ein CAN-Bus ausgebildet ist.

4. Haushaltsgerätevorrichtung (10) nach einem der vorherigen Ansprüche, **dadurch gekennzeichnet, dass** das Primär-Steuerungsgerät (30) an einer Oberseite des Gehäuses (70) angeordnet ist.

5. Haushaltsgerätevorrichtung (10) nach einem der vorherigen Ansprüche, **dadurch gekennzeichnet, dass** das Primär-Steuerungsgerät (30) von einer Isolierschicht des Gehäuses (70) zumindest teilweise umgeben ist.

6. Haushaltsgerätevorrichtung (10) nach einem der vorherigen Ansprüche, **gekennzeichnet durch** einen Maschinenraum (90), welcher von dem Gehäuse (70) definiert ist und in und/oder an welchem das Leistungssteuerungsgerät (20) angeordnet ist.

7. Haushaltsgerätevorrichtung (10) nach einem der vorherigen Ansprüche, **dadurch gekennzeichnet, dass** das Primär-Steuerungsgerät (30) als eine Sicherheitskleinspannung-Komponente und das Leistungssteuerungsgerät (20) als eine Netzspannungskomponente ausgebildet sind.

8. Haushaltsgerätevorrichtung (10) nach einem der vorherigen Ansprüche, **dadurch gekennzeichnet, dass** das Leistungssteuerungsgerät (20) eine Sicherheitskleinspannung für das Primär-Steuerungsgerät (30) über die Busverbindung bereitstellt.

9. Haushaltsgerätevorrichtung (10) nach einem der vorherigen Ansprüche, **dadurch gekennzeichnet, dass** das Leistungssteuerungsgerät (20) ein Netzteil umfasst, durch welches eine Verbindung zu länderspezifischen Versorgungsleitungen (60) herstellbar ist.

10. Haushaltsgerätevorrichtung (10) nach einem der vorherigen Ansprüche, **dadurch gekennzeichnet, dass** das Leistungssteuerungsgerät (20) eine Schnittstelle zu einer Programmierung länderspezifischer Anforderungen aufweist.

11. Haushaltsgerätevorrichtung (10) nach einem der vorherigen Ansprüche, **gekennzeichnet, durch** wenigstens ein Funktionssteuerungsgerät (40), das bezüglich einer Höhenrichtung räumlich zwischen dem Leistungssteuerungsgerät (20) und dem Primär-Steuerungsgerät (30) angeordnet ist.

12. Haushaltsgerätevorrichtung (10) nach Anspruch 11, **gekennzeichnet, durch** einen weiteren Nutzraum (82), insbesondere einen Gefrierraum, und ein weiteres Funktionssteuerungsgerät (42), wobei das Funktionssteuerungsgerät (40) eine Kältesystemsteuerung und/oder eine Eisbereitersteuerung für den Nutzraum (81) umfasst, und das weitere Funktionssteuerungsgerät (42) eine Kältesystemsteuerung und/oder eine Eisbereitersteuerung für den weiteren Nutzraum (82) umfasst.

13. Haushaltsgerät (100) mit einer Haushaltsgerätevorrichtung (10) nach einem der vorherigen Ansprüche.
